# EUROPEAN PATENT APPLICATION

(11) **EP 2 237 199 A1**
(43) Date of publication of application: **06.10.2010**
(21) Application number: 09172804.8
(22) Date of filing: 12.10.2009
(51) Int. Cl.: G06Q 10/00, G06K 9/00

(54) **Contact management systems and methods**

(30) Priority: 02.04.2009 TW 98111002
(71) Applicant: HTC Corporation, Taoyuan County 330 (TW)
(72) Inventor: Tseng, Chun-Hao, 330, Taoyuan City Taoyuan County (TW); Yeh, Shih-Hao, 330, Taoyuan City Taoyuan County (TW)
(74) Representative: 2K Patentanwälte Blasberg Kewitz & Reichel

(57) **Abstract**

Contact management systems and methods are provided. The contact management system includes a storage unit, a display unit, and a processing unit. The storage unit includes a plurality of photos. The display unit displays the photos. The processing unit receives a selection corresponding to one of the photos, and recognizes at least one candidate photo from the photos according to a recognition method, wherein the candidate photo is identical to the selected photo. The processing unit displays the at least one candidate photo via the display unit, and receives a selection corresponding to one of the at least one candidate photo. The processing unit sets the selected candidate photo as an identifier of a contact.

## Description

### CROSS REFERENCE TO RELATED APPLICATION

This Application claims priority of Taiwan Patent Application No. 098111002, filed on April 2, 2009, the entirety of which is incorporated by reference herein.

### BACKGROUND OF THE INVENTION

### Field of the Invention

The disclosure relates generally to contact management systems and methods, and, more particularly to contact management systems and methods that edit contact identifiers.

### Description of the Related Art

Recently, portable devices, such as handheld devices, have become more and more technically advanced and multifunctional. For example, a handheld device may have telecommunication capabilities, e-mail message capabilities, an advanced address book management system, a media playback system, and various other functions. Due to increased convenience and functions of the devices, these devices have become necessities of life.

Address book management is one of the frequently used functions on these devices. Generally, users can edit personal contact information and corresponding information, such as a phone number and an address in a device. In some cases, users may edit corresponding identifiers, such as representative photos for the respective personal contact information, thus to more easily recognize personal contact information.

Conventionally, when editing of the identifier, users must use image editing software to manually crop a photo, thus to obtain a face area in the photo, wherein the cropped photo with the face area is transmitted to a handheld device. Then, users can review photos in the handheld device, and set a specific photo as the identifier of a specific contact. It is noted that, users must have related knowledge and ability of the techniques for operating the image editing software, uploading photos to the handheld device, and operating the functions in the handheld device, to complete the editing of identifier. The described conventional operations are complex and inconvenient for users.

### BRIEF SUMMARY OF THE INVENTION

Contact management systems and methods are provided.

An embodiment of a contact management system includes a storage unit, a display unit, and a processing unit. The storage unit includes a plurality of photos. The display unit displays the photos. The processing unit receives a selection corresponding to one of the photos, and recognizes at least one candidate photo from the photos according to a recognition method, wherein the candidate photo is substantially identical to the selected photo. The processing unit displays the at least one candidate photo via the display unit, and receives a selection corresponding to one of the at least one candidate photo. The processing unit sets the selected candidate photo as an identifier of a contact.

An embodiment of a contact management system includes a storage unit, a display unit, and a processing unit. The storage unit includes a plurality of photos. The processing unit receives a selection corresponding to a contact, recognizes at least one candidate photo from the photos according to a tag of the contact, and displays the at least one candidate photo via the display unit. The processing unit receives a selection corresponding to one of the at least one candidate photo, and sets the selected candidate photo as an identifier of the contact.

In an embodiment of a contact management method, a plurality of photos are displayed, and a selection corresponding to one of the photos is received. Then, at least one candidate photo is recognized from the photos according to a recognition method, wherein the candidate photo is substantially identical to the selected photo, and the at least one candidate photo is displayed. Then, a selection corresponding to one of the at least one candidate photo is received, and the selected candidate photo is set as an identifier of a contact.

In an embodiment of a contact management method, a selection corresponding to a contact is received, wherein the contact has a tag. Then, at least one candidate photo is recognized from the photos according to the tag of the contact, and the at least one candidate photo is displayed. Then, a selection corresponding to one of the at least one candidate photo is received, and the selected candidate photo is set as an identifier of the contact.

Contact management systems and methods may take the form of a program code embodied in a tangible media. When the program code is loaded into and executed by a machine, the machine becomes an apparatus for practicing the disclosed method.

### BRIEF DESCRIPTION OF THE DRAWINGS

The invention will become more fully understood by referring to the following detailed description with reference to the accompanying drawings, wherein:

Fig. 1 is a schematic diagram illustrating an embodiment of a contact management system of the invention;

Fig. 2 is a flowchart of an embodiment of a contact management method of the invention;

Fig. 3 is a flowchart of an embodiment of a method for recognizing candidate photos of the invention;

Figs. 4A∼4D are schematic diagrams illustrating an embodiment of an example of contact management of the invention;

Fig. 5 is a flowchart of another embodiment of a contact management method of the invention; and

Fig. 6 is a flowchart of another embodiment of a method for recognizing candidate photos of the invention.

### DETAILED DESCRIPTION OF THE INVENTION

Contact management systems and methods are provided.

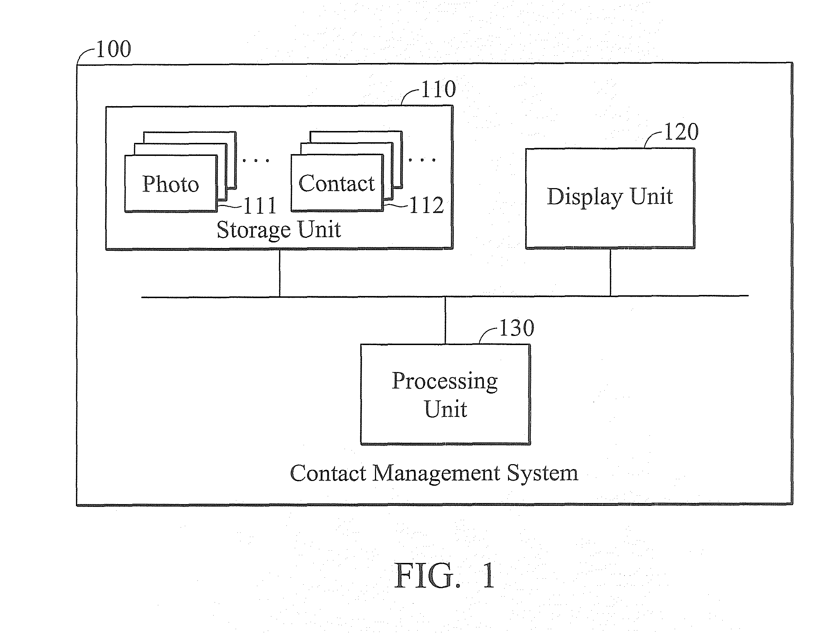

Fig. 1 is a schematic diagram illustrating an embodiment of a contact management system of the invention. The contact management system 100 can be used in an electronic device, such as a portable device comprising handheld devices such as a media player, a PDA (Personal Digital Assistant), a GPS (Global Positioning System) device, a smart phone, a mobile phone, a MID (Mobile Internet Device, MID), and a Netbook.

The contact management system 100 comprises a storage unit 110, a display unit 120, and a processing unit 130. The storage unit 110 comprises a plurality of photos 111 and information corresponding to at least one contact 112. In some embodiments, each photo and contact may respectively have a tag recording classification and/or attribute. The use of the tag is discussed later. The display unit 120 can be used to display the photos and related interfaces and data. In some embodiments, the display unit 120 can be integrated with a touch-sensitive device (not shown) to be a touch-sensitive display unit. The touch-sensitive device has a touch-sensitive surface comprising sensors in at least one dimension to detect contact and movement of an input tool, such as a stylus or finger on the touch-sensitive surface. Users can directly perform related selections and input via the touch-sensitive display unit. The processing unit 130 performs the contact management method of the invention, which will be discussed further in the following paragraphs.

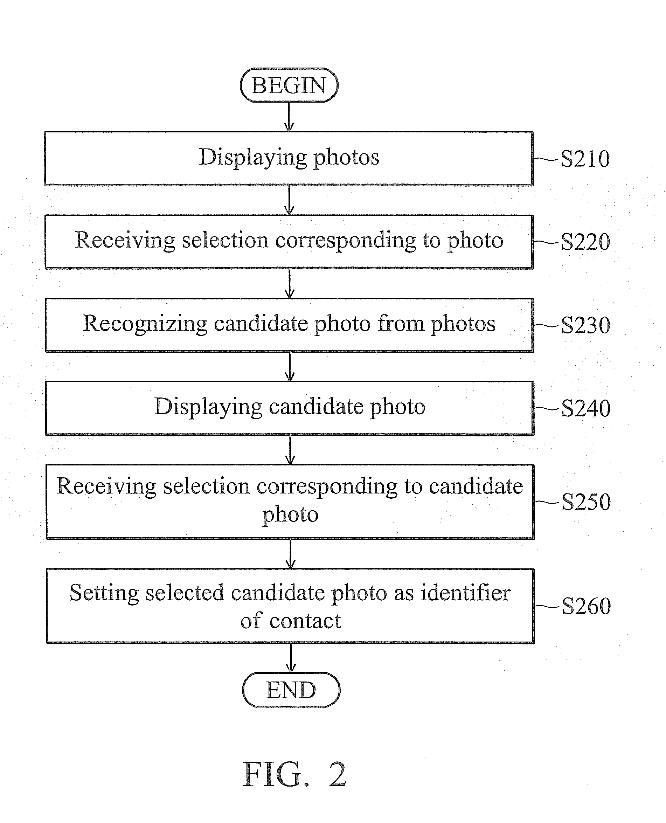

Fig. 2 is a flowchart of an embodiment of a contact management method of the invention. The contact management method can be used for an electronic device, such as a portable device comprising handheld devices such as a media player, a PDA, a GPS device, a smart phone, a mobile phone, a MID, and a Netbook.

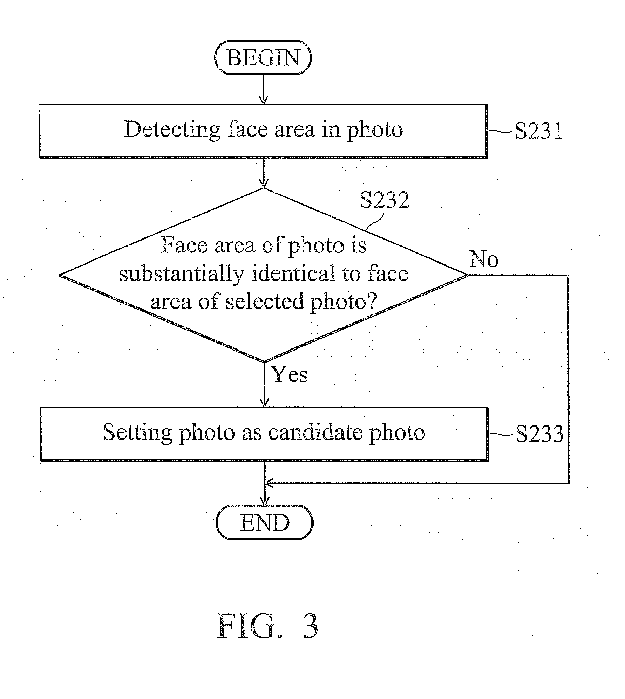

In step S210, the photos 111 in the storage unit 110 are displayed in the display unit 120. It is noted that, all of the photos 111 or a part of the photos 111 can be displayed in the display unit 120 at a time. It is understood that, in some embodiments, when the contact 112 in the storage unit 110 is selected, the photo 111 can be displayed in the display unit 120 in response to the selection corresponding to the contact. In step S220, a selection corresponding to one of the photos 111 is received. It is noted that, when the display unit 120 is a touch-sensitive display unit, the selection corresponding to one of the photos 111 can be directly received via the touch-sensitive display unit. After the selection corresponding to one of the photos 111 is received, in step S230, at least one candidate photo is recognized from the photos 111 according to a recognition method, wherein the candidate photo is substantially identical to the selected photo, and in step S240, the at least one candidate photo is displayed. Fig. 3 is a flowchart of an embodiment of a method for recognizing candidate photos of the invention. In step S231, a face area in the respective photos 111 is detected using a face detection method. In step S232, it is determined whether the face area of each photo 111 is substantially identical to the face area of the selected photo using the recognition method, such as a face recognition method. If the face area of the photo 111 is not substantially identical to the face area of the selected photo (No in step S232), the procedure is completed. If the face area of the photo 111 is substantially identical to the face area of the selected photo (Yes in step S232), in step S233, the photo with the identical face area is set as the candidate photo. It is understood that, in some embodiments, the detected face area can be cropped from the photo to obtain the candidate photo. Then, in step S250, a selection corresponding to one of the candidate photos is received, and in step S260, the selected candidate photo is set as an identifier of the contact. Similarly, when the display unit 120 is a touch-sensitive display unit, the selection corresponding to one of the candidate photos can be directly received via the touch-sensitive display unit.

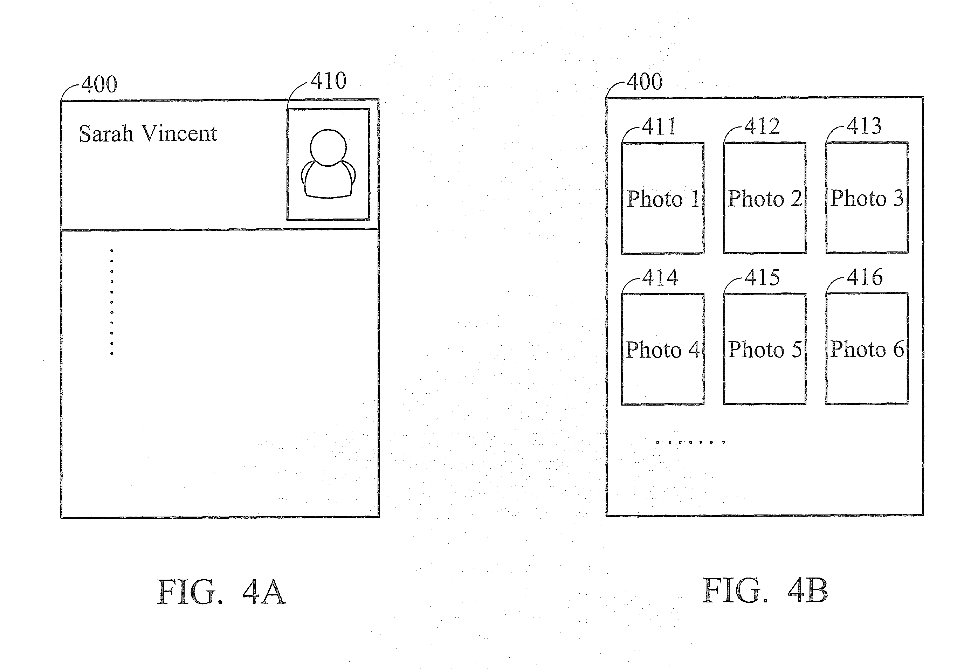

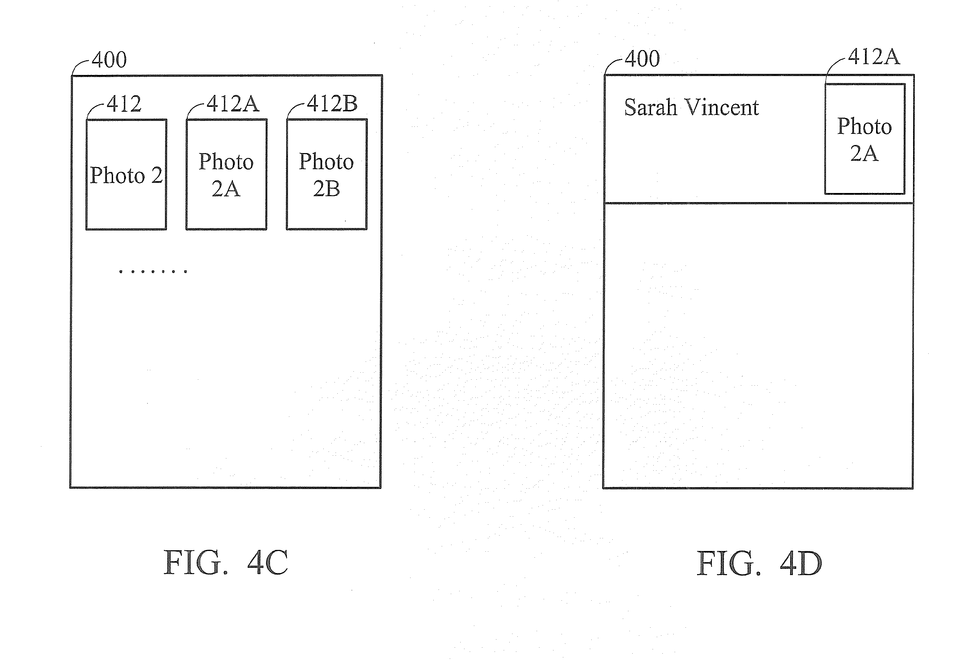

For example, when a user wants to edit the identifier for a contact "Sarah Vincent", an identifier editing notation 410 corresponding to the contact can be selected via the display unit 400, as shown in Fig. 4A. After the identifier editing notation 410 is selected, photos 1∼6 (411, 412, 413, 414, 415 and 416) in the storage unit of the electronic device are displayed in the display unit 400, as shown in Fig. 4B. The user can select one of the displayed photos from the display unit 400. When photo 2 (412) is selected, photo 2A (412A) and photo 2B (412B) which are substantially identical to photo 2 (412) in the storage unit are recognized as candidate photos, and displayed in the display unit 400, as shown in Fig. 4C. It is understood that, the face areas of photo 2A (412A) and photo 2B (412B) can be detected and recognized as being substantially identical to the face area of photo 2 (412). Then, the user can select one of the candidate photos, such as photo 2A (412A). The selected candidate photo, such as photo 2A (412A) is set as an identifier for the contact "Sarah Vincent", as shown in Fig. 4D.

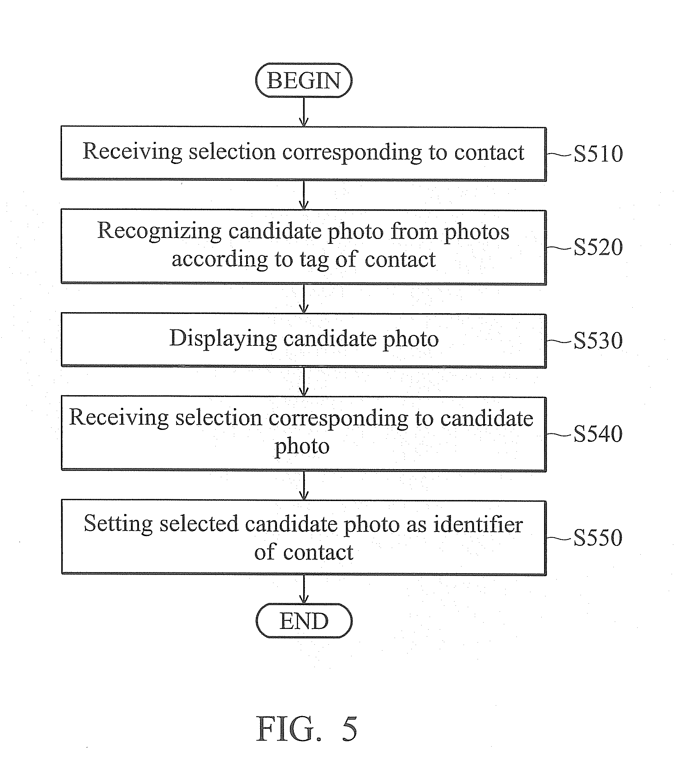

Fig. 5 is a flowchart of another embodiment of a contact management method of the invention. The contact management method can be used for an electronic device, such as a portable device comprising handheld devices such as a media player, a PDA, a GPS device, a smart phone, a mobile phone, a MID, and a Netbook. In this embodiment, each photo and contact may respectively have a tag recording corresponding classification and/or attribute.

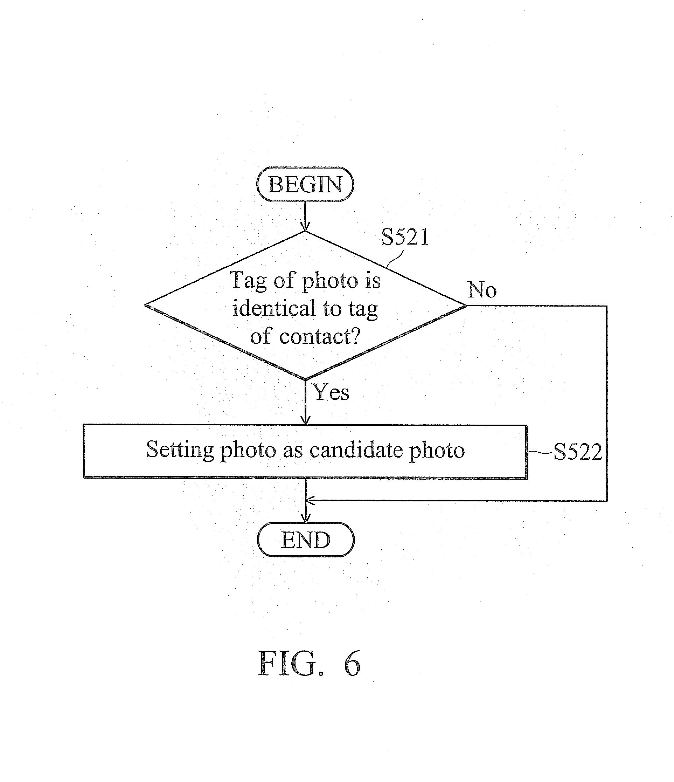

In step S510, a selection corresponding to a contact is received. It is noted that, when the display unit 120 is a touch-sensitive display unit, the selection corresponding to the contact can be directly received via the touch-sensitive display unit. Then, in step S520, at least one candidate photo is recognized from the photos 111 in the storage unit 110 according to the tag of the contact, and in step S530, the at least one candidate photo is displayed. Fig. 6 is a flowchart of another embodiment of a method for recognizing candidate photos of the invention. In step S521, it is determined whether the tag of each photo is identical to the tag of the contact. If the tag of the photo is not identical to the tag of the contact (No in step S521), the procedure is completed. If the tag of the photo is identical to the tag of the contact (Yes in step S521), in step S522, the photo with the identical tag is set as the candidate photo. It is understood that, in some embodiments, a face area in the candidate photo can be detected using a face detection method, and the face area can be cropped from the candidate photo to obtain the candidate photo. Then, in step S540, a selection corresponding to one of the candidate photos is received, and in step S550, the selected candidate photo is set as an identifier of the contact. Similarly, when the display unit 120 is a touch-sensitive display unit, the selection corresponding to one of the candidate photos can be directly received via the touch-sensitive display unit. In this embodiment, when the identifier editing notation corresponding to the contact is selected via the display unit 120, the candidate photos can be directly recognized and displayed according to the tag of the contact. When one of the candidate photos is selected, the selected candidate is set as an identifier of the contact.

Therefore, the contact management systems and methods can efficiently complete the editing of contact identifiers using simple interfaces and mechanisms.

Contact management systems and methods, or certain aspects or portions thereof, may take the form of a program code (i.e., executable instructions) embodied in tangible media, such as floppy diskettes, CD-ROMS, hard drives, or any other machine-readable storage medium, wherein, when the program code is loaded into and executed by a machine, such as a computer, the machine thereby becomes an apparatus for practicing the methods. The methods may also be embodied in the form of a program code transmitted over some transmission medium, such as electrical wiring or cabling, through fiber optics, or via any other form of transmission, wherein, when the program code is received and loaded into and executed by a machine, such as a computer, the machine becomes an apparatus for practicing the disclosed methods. When implemented on a general-purpose processor, the program code combines with the processor to provide a unique apparatus that operates analogously to application specific logic circuits.

While the invention has been described by way of example and in terms of preferred embodiment, it is to be understood that the invention is not limited thereto. Those who are skilled in this technology can still make various alterations and modifications without departing from the scope and spirit of this invention. Therefore, the scope of the present invention shall be defined and protected by the following claims and their equivalents.

## Claims

1. A contact management system for use in an electronic device, comprising:
a storage unit comprising a plurality of photos;
a display unit displaying the photos; and
a processing unit receiving a selection corresponding to one of the photos, recognizing at least one candidate photo from the photos according to a recognition method, wherein the candidate photo is substantially identical to the selected photo, displaying the at least one candidate photo via the display unit, receiving a selection corresponding to one of the at least one candidate photo, and setting the selected candidate photo as an identifier of a contact.

2. The system of claim 1, wherein the display unit is a touch-sensitive display unit, and the selection corresponding to one of the photos and the selection corresponding to one of the at least one candidate photo are received via the touch-sensitive display unit.

3. The system of claim 1, wherein the processing unit further detects a face area in each photo using a face detection method.

4. The system of claim 3, wherein the recognition method is a face recognition method, and the processing unit recognizes the at least one candidate photo from the photos by determining whether the face area of each photo is substantially identical to the face area of the selected photo, and when the face area of each photo is substantially identical to the face area of the selected photo, the photo is recognized as the candidate photo.

5. The system of claim 1, wherein the processing unit further detects a face area in the at least one candidate photo using a face detection method, and crops the face area from the candidate photo to obtain the candidate photo.

6. The system of claim 1, wherein the processing unit further receives a selection corresponding to the contact, and enables the display unit to display the photos in response to the selection corresponding to the contact.

7. A contact management method for use in an electronic device, comprising:
displaying the photos;
receiving a selection corresponding to one of the photos;
recognizing at least one candidate photo from the photos according to a recognition method, wherein the candidate photo is substantially identical to the selected photo;
displaying the at least one candidate photo;
receiving a selection corresponding to one of the at least one candidate photo; and
setting the selected candidate photo as an identifier of a contact.

8. The method of claim 7, further comprising detecting a face area in each photo using a face detection method.

9. The method of claim 8, wherein the recognition method is a face recognition method, and the recognition of the at least one candidate photo from the photos is performed by determining whether the face area of each photo is substantially identical to the face area of the selected photo, and when the face area of each photo is substantially identical to the face area of the selected photo, the photo is recognized as the candidate photo.

10. The method of claim 7, further comprising:
detecting a face area in the at least one candidate photo using a face detection method; and
cropping the face area from the candidate photo to obtain the candidate photo.

11. The method of claim 7, further comprising:
receiving a selection corresponding to the contact; and
displaying the photos in response to the selection corresponding to the contact.
